# EUROPÄISCHE PATENTSCHRIFT

(11) **EP 2 928 682 B1**
(45) Veröffentlichungstag und Bekanntmachung des Hinweises auf die Patenterteilung: **30.05.2018**
(21) Anmeldenummer: 13826553.3
(22) Anmeldetag: 29.11.2013
(51) Int. Cl.: B30B 15/28, G01L 1/16, G01L 1/26, G01L 5/00

(54) **STANZVORRICHTUNG MIT EINEM SENSOR UND VERFAHREN ZUR ÜBERTRAGUNG EINES SENSORSIGNALS**
STAMPING DEVICE WITH A SENSOR AND METHOD FOR TRANSMITTING A SENSOR SIGNAL
DISPOSITIF D'ESTAMPAGE POURVU D'UN CAPTEUR ET PROCÉDÉ DE TRANSMISSION D'UN SIGNAL DU CAPTEUR

(30) Priorität: 04.12.2012 DE 102012023665
(43) Veröffentlichungstag der Anmeldung: 14.10.2015
(73) Patentinhaber: MARPOSS Monitoring Solutions GmbH, 21272 Egestorf (DE)
(72) Erfinder: SCHNEIDER, Hans Peter, D-42549 Velbert (DE); GERHARDT, Dietmar, D-40789 Monheim am Rhein (DE); HAMANN, Kai, D-40479 Düsseldorf (DE)
(74) Vertreter: Patentanwälte Vomberg & Schart
(86) Internationale Anmeldenummer: PCT/DE2013/000710
(87) Internationale Veröffentlichungsnummer: WO 2014/086328

(56) Entgegenhaltungen:
- EP-A2- 1 057 586
- WO-A2-03/021839
- DE-A1-102011 011 824
- US-A- 3 444 390
- US-A- 4 979 401

## Beschreibung

Die vorliegende Erfindung betrifft eine Stanzvorrichtung gemäß dem Oberbegriff des Anspruchs 1 mit mindestens einem oszillierenden Maschinenteil, das mindestens einen piezoelektrischen Sensor besitzt.

Ferner betrifft die Erfindung ein Verfahren gemäß Anspruch 9 zur Übertragung eines Sensorsignals eines piezoelektrischen Sensors, der an einem oszillierenden Maschinenteil einer Stanzvorrichtung, insbesondere an einem Niederhalter, angeordnet ist.

Beim Stanzen werden Flachteile (bzw. Werkstücke oder Stanzprodukte) aus unterschiedlichen Werkstoffen, wie beispielsweise Blech, Pappe oder Textilien, mit einer Presse oder einem Schneidwerkzeug gefertigt. Dabei besteht eine Stanzvorrichtung üblicherweise aus einem Stempel und einer Matrize, die in einer Bodenplatte angeordnet sein kann.

Damit sichergestellt ist, dass das Flachteil (bzw. das Material zur Herstellung des Flachteils) beim Stanzen an der richtigen Stelle angeordnet ist und auch dort während des Stanzens verbleibt, werden die Flachteile mittels eines Niederlhalters auf die Bodenplatte gedrückt und dort fixiert. Nach dem Stanzen wird der Niederhalter angehoben, so dass das Flachteil einer weiteren Bearbeitungsstation übergeben werden kann. Die beim Stanzen entstehenden Abfälle, sogenannte Stanzbutzen, werden optimalerweise so abgeführt, dass sie die weiteren Stanzprozesse nicht behindern. Allerdings können Stanzbutzen während des Stanzprozesses auch ungewollt vom Stempel aus dem Butzenkanal hochgezogen werden und dann an zufälligen Stellen zwischen dem Flachteil und dem Niederhalter oder dem Stempel zum Liegen kommen. Beim anschließenden niederdrücken durch den Niederhalter oder beim anschließenden Stanzprozess beschädigen solche Stanzbutzen regelmäßig die Oberfläche der Flachteile, indem die Stanzbutzen Butzenabdrücke auf der Oberfläche hinterlassen.

Zur Erkennung von Stanzbutzen wurden Stanzvorrichtungen der eingangs genannten Art geschaffen, bei denen das bewegliche Maschinenteil, insbesondere der Niederhalter, einen piezoelektrischen Sensor besitzt, der bei auftretenden Druckbelastungen oder einer Verformung ein elektrisches Signal erzeugt. Dieses Signal wird über ein elektrisches Kabel einer Auswerteeinheit zugeführt, wo die Daten ausgewertet werden. Sobald die Auswerteeinheit ein Signal erkennt, das auf eine zwischen dem beweglichen Maschinenteil und dem Flachteil angeordnete Stanzbutze hindeutet, wird der Stanzprozess sofort unterbrochen, so dass die Stanzbutzen entfernt werden können. Auf diese Weise wird vermieden, dass eine große Anzahl von Flachteilen mit unerwünschten Butzenabdrücken produziert wird, die teilweise nicht mehr an die Kunden ausgeliefert werden können.

Bei herkömmlichen Stanzmaschinen sind die piezoelektrischen Sensoren nachteiligerweise zur Datenübertragung über Kabel mit der Auswerteeinheit verbunden, was insbesondere bei Stanzmaschinen zu Problemen führt, bei denen das bewegliche Maschinenteil mit einer hohen Frequenz betrieben wird, womit die Sensoren und insbesondere die Kabelverbindungen einer hohen Beschleunigung ausgesetzt sind. Bereits bei Stanzmaschinen, die einen durchschnittlichen Durchlauf bzw. eine durchschnittliche Produktionsgeschwindigkeit besitzen, sind Beschleunigungskräfte von 1.000 G keine Seltenheit. Aufgrund der hohen Dauerbelastung reißt die Kabelverbindung an Sensoren bei solchen Stanzvorrichtungen regelmäßig ab, was mit langen und damit kostenaufwendigen Reparatur- und Wartungsarbeiten verbunden ist.

Weiterer Stand der Technik ist den Offenlegungsschriften EP 1 057 586 A2, US 4,979,401 und WO 03/021839 A2 zu entnehmen. EP 1 057 586 A2 offenbart gemäß dem Oberbegriff des Anspruchs 1 unter anderem einen Stempel einer Stanzvorrichtung, an dem ein piezoelektrischer Sensor angeordnet ist. US 4,979,401 betrifft eine Pressvorrichtung, in der ein piezoelektrischer Sensor angeordnet ist. In WO 03/021839 A2 wird ein Verfahren zur berührungslosen Übertragung von Messdaten offenbart, insbesondere für Schleif-, Bohr- und Fräsmaschinen.

Es ist daher die Aufgabe der vorliegenden Erfindung, diese Nachteile zu beheben und die Gefahr eines Kabelabrisses an einem piezoelektrischen Sensor eines oszillierenden Maschinenteils auszuräumen.

Diese Aufgabe wird durch die Stanzvorrichtung nach Anspruch 1 gelöst. Auf diese Weise können die Sensordaten durch eine induktive Kopplung von dem (beweglich gelagerten) Sensor an eine (ruhende) Empfängerspule (zweite Spule) übertragen werden. Von dort aus wird das Signal über eine Kabelverbindung an die Auswerteeinheit übertragen, wo das Sensorsignal ausgewertet wird. Insgesamt wird durch die kabellose Übertragung des Sensorsignals von der ersten Spule auf die zweite Spule ein Kabelabriss am Sensor und damit ein wartungsbedingter Stillstand der Stanzvorrichtung vermieden. Darüber hinaus dient die erfindungsgemäße Vorrichtung auch als Stempelbrucherkennung.

Bevorzugte Ausführungsformen der erfindungsgemäßen Stanzvorrichtung werden im Folgenden und in den Unteransprüchen beschrieben.

Das von dem piezoelektrischen Sensor erzeugte Signal ist je nach der auftretenden Spannung relativ gering. Um insbesondere auch bei kleinen Signalstärken eine ausreichende Signalübertragung zu ermöglichen, bildet nach einer ersten bevorzugten Ausgestaltung die erste Spule zusammen mit dem piezoelektrischen Sensor und mindestens einer Kapazität - wie beispielsweise einem Kondensator - einen elektrischen Schwingkreis. In Abhängigkeit von der Induktivität der Spule und der Größe der Kapazität weist der Schwingkreis eine bestimmte Eigenfrequenz auf. Sobald der piezoelektrische Sensor verformt wird und hierdurch eine Spannung erzeugt wird, wird die Eigenfrequenz des Schwingkreises geändert bzw. verstimmt. Somit stellt die Änderung der Eigenfrequenz des Schwingkreises ein Maß für die Spannung und damit die Kraft dar, die auf den piezoelektrischen Sensor wirkt.

Zum Anregen der Eigenfrequenz des Schwingkreises ist die zweite Spule vorzugsweise mit einer Sendereinheit bzw. einem Impulsgeber für die Übertragung elektrischer Energie auf die erste Spule verbunden. Durch die regelmäßige Abgabe von Impulsen in geeigneten Zeitabständen wird die Schwingung im Schwingkreis aufrechterhalten. Dabei wird durch die induktive Kopplung in der zweiten Spule ein Strom mit einer entsprechenden Stromstärke und Frequenz induziert. Dieses (modulierte) Signal wird an einen geeigneten Demodulator (Frequenz- oder Amplitudendemodulator) gesendet, so dass nach erfolgter Demodulation das ursprüngliche Sensorsignal der Auswerteeinheit übermittelt werden kann.

Zur Verbesserung der induktiven Kopplung sind die erste und die zweite Spule vorzugsweise über ein ferromagnetisches Material, insbesondere einen Ferritkern, induktiv miteinander gekoppelt. Bei dieser Ausgestaltung sind die Spulen in längsaxialer Richtung voneinander beabstandet. Alternativ hierzu können die Spulen auch koaxial zueinander angeordnet sein, wobei die erste Spule die zweite Spule umgreift oder umgekehrt.

Nach einer weiteren bevorzugten Ausführungsform der Erfindung ist die erste Spule innerhalb eines Trägers angeordnet, der vorzugsweise ein- oder zweistückig mit dem oszillierenden Maschinenteil verbunden ist. Eine zweistückige Verbindung kann beispielsweise als eine Schraub- oder Steckverbindung zwischen dem Träger und dem oszillierenden Maschinenteil ausgeführt sein. Alternativ ist auch eine Integrierung des Trägers in dem oszillierenden Maschinenteil denkbar, womit eine einstückige Verbindung vorliegt. Hierzu kann der Träger beispielsweise mit dem oszillierenden Maschinenteil vergossen sein.

Nach einer weiteren bevorzugten Ausführungsform der erfindungsgemäßen Stanzvorrichtung ist das oszillierende Maschinenteil ein Niederhalter, wo sich der Einsatz einer kabellosen Sensordatenübertragung besonders bewährt hat.

Ein solcher Niederhalter ist vorzugsweise über elastische Elemente mit einer Oberplatte der Stanzvorrichtung verbunden, wobei an der Oberplatte der Stempel angeordnet ist. Zum Stanzen sind die Oberplatte, der Stempel und der Niederhalter längsaxial beweglich gelagert. Genaueres zu dem Arbeitsablauf beim Stanzen wird in der Figurenbeschreibung erläutert.

Die vorliegende Erfindung betrifft darüber hinaus ein Verfahren gemäß Anspruch 9 zur Übertragung eines Sensorsignals eines piezoelektrischen Sensors, der an einem oszilliereden Maschinenteil einer Stanzvorrichtung, insbesondere an einem Niederhalter, angeordnet ist. Erfindungsgemäß ist der piezoelektrische Sensor mit einer ersten Spule verbunden, die induktiv mit einer zweiten Spule gekoppelt ist, so dass ein an dem piezoelektrischen Sensor entstehendes Sensorsignal auf die zweite Spule übertragen und anschließend an eine Auswerteeinheit übermittelt wird. Durch dieses Verfahren ist ein kabelloses Übertragung des Sensorsignals möglich, so dass auf eine kabelgebundene Verbindung zwischen einer Auswerteeinheit und dem Sensor verzichtet werden kann. Ein Abreißen der Kabelverbindung aufgrund der beim Stanzen auftretenden Beschleunigungskräfte wird hierdurch vermieden.

Bevorzugte Ausführungsformen des erfindungsgemäßen Verfahrens werden im Folgenden und in den Unteransprüchen beschrieben.

Es wurde bereits erläutert, dass das von dem piezoelektrischen Sensor erzeugte Signal je nach der auftretenden Spannung relativ gering ist. Um insbesondere auch bei kleinen Signalstärken eine ausreichende Auswertung des Signals zu ermöglichen, ist nach einer bevorzugten Ausgestaltung des erfindungsgemäßen Verfahrens vorgesehen, dass der piezoelektrische Sensor zusammen mit der ersten Spule und mindestens einer Kapazität einen ersten elektrischen Schwingkreis bildet, der durch eine Energieübertragung von der zweiten Spule auf die erste Spule angeregt wird, wobei sich die Schwingung der ersten Spule anschließend auf die zweite Spule überträgt. Die Energieübertragung von der zweiten Spule auf die erste Spule wird vorzugsweise über einen Impulsgeber durchgeführt, wodurch der Schwingkreis angeregt wird, der anschließend mit seiner Eigenfrequenz schwingt, die durch die Induktivität der Spule und die Größe der Kapazität gegeben ist. Ein durch den piezoelektrischen Sensor erzeugtes Sensorsignal ändert die im Schwingkreis angeregte Hochfrequenz, die auf die zweite Spule übertragen wird. Das Sensorsignal ergibt sich anschließend aus einer Demodulation (Frequenz- oder Amplitudendemodulation) des Hochfrequenzsignals an der zweiten Spule. Das so bestimmte Sensorsignal wird anschließend der Auswerteeinheit übermittelt und dort ausgewertet.

Konkrete Ausführungsformen der vorliegenden Erfindung werden im Folgenden anhand der Figuren erläutert. Es zeigen:
- Fig. 1:: eine schematische Darstellung einer Übertragungsvorrichtung,
- Fig. 2a:: eine Detailansicht einer Stanzvorrichtung nach dem Stand der Technik,
- Fig. 2b-c:: Detailansichten einer Stanzvorrichtung und
- Fig. 3:: eine Stanzvorrichtung.

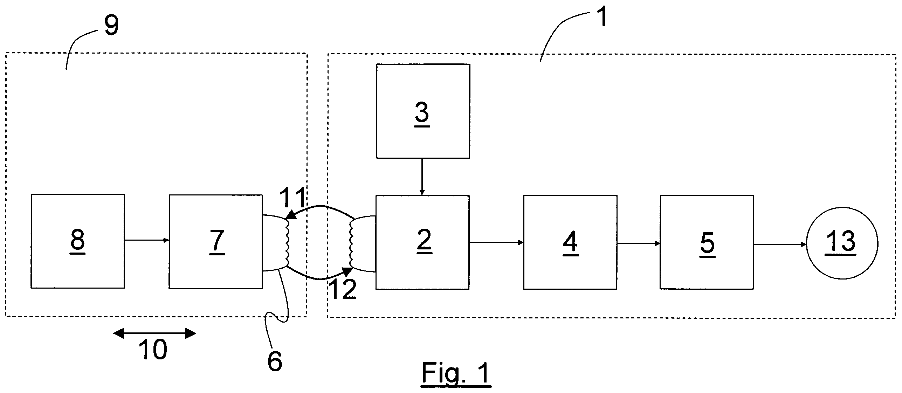

Eine Signalübertragungsvorrichtung, wie Sie vorzugsweise an einer erfindungsgemäßen Stanzvorrichtung angeordnet ist, und das Verfahren zur Übertragung eines Sensorsignals werden in Fig. 1 schematisch dargestellt. Die Signalübertragungsvorrichtung besitzt eine ortsfeste Sendereinheit 1, die eine Spule 2, einen Impulsgeber 3, einen Verstärker 4 und einen Demodulator 5 besitzt. Die Spule 2 ist induktiv mit einer Spule 6 gekoppelt, die Teil eines verstimmbaren elektrischen Schwingkreises 7 ist. Der Schwingkreis 7 ist zudem mit einem piezoelektrischen Sensor 8 verbunden, der in Abhängigkeit der dort erzeugten Spannung die Eigenfrequenz des Schwingkreises 7 ändert bzw. verstimmt. Der Schwingkreis 7 und der Sensor 8 sind zusammen in einem Träger 9 angeordnet, der in Pfeilrichtung 10 beweglich gelagert ist und im Betrieb im Wesentlichen eine oszillierende Bewegung ausführt. Beispielsweise kann der Träger an einem beweglichen Maschinenteil, insbesondere an einem Niederhalter, angeordnet sein. Die Eigenfrequenz in dem Schwingkreis 7 wird mittelbar durch den Impulsgeber 3 angeregt, der hierzu in geeigneten Zeitabständen einen Strom in der Spule 2 erzeugt. Das hierdurch entstehende Magnetfeld induziert in der Spule 6 einen Strom (Pfeil 11), wodurch der Schwingkreis 7 angeregt wird.

Sobald in dem piezoelektrischen Sensor 8 eine Spannung erzeugt wird, wird die Schwingung bzw. Frequenz in dem Schwingkreis 7 geändert. Durch die induktive Kopplung der Spulen 2 und 6 wird die Hochfrequenz des Schwingkreises 7 von der Spule 6 auf die Spule 2 übertragen (Pfeil 12). Das Signal wird anschließend durch einen Verstärker 4 verstärkt und zu dem Demodulator 5 weitergeleitet. Nach erfolgter Demodulation (Frequenz- oder Amplitudendemodulation) ergibt sich das ursprüngliche Sensorsignal 13, das Aufschluss über die mechanische Belastung und mithin über die Prozessänderung am piezoelektrischen Sensor 8 liefert und anhand dessen eine Auswerteeinheit (in Fig. 1 nicht dargestellt) bestimmt, ob der laufende Prozess fortgeführt werden kann oder abgebrochen werden muss, sofern die mechanische Belastung einen vorgebbaren Wert übersteigt.

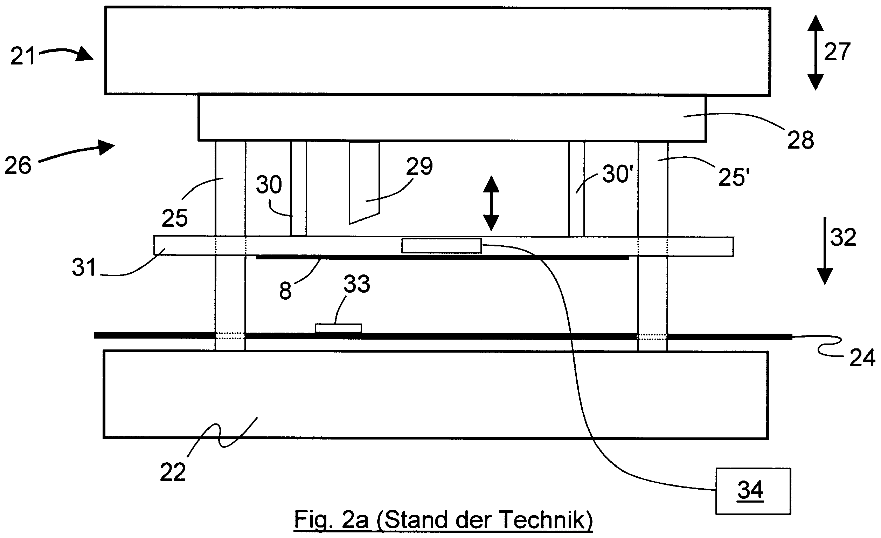

Fig. 2a zeigt eine detaillierte Ansicht einer nach dem Stand der Technik bekannten Ausführungsform einer Stanzvorrichtung 21, die eine Bodenplatte 22 besitzt, auf der ein Flachteil oder Werkstück 24 liegt. Entlang von Führungssäulen 25, 25' ist das Oberwerkzeug 26 in Pfeilrichtung 27 beweglich gelagert. Das Oberwerkzeug 26 besitzt eine Oberplatte 28, an dem der Stempel 29 befestigt ist. Darüber hinaus ist die Oberplatte 28 über elastische Elemente 30, 30' mit einem Niederhalter 31 verbunden, an dem ein piezoelektrischen Sensor 8 befestigt ist, der über eine Kabelverbindung 35 mit der Auswerteeinheit 34 verbunden ist. Zum Stanzen wird das Oberwerkzeug 26 in Pfeilrichtung 32 abgesenkt, bis der Niederhalter 31 das Werkzeugstück 24 kontaktiert und für den anschließenden Stanzvorgang festhält. Bei einer weiteren Absenkung werden die elastischen Elemente 30, 30' zusammengedrückt, so dass sich der Druck des Niederhalters 31 auf das Werkstück 24 erhöht. Schließlich schneiden die Stempel 29, 29' das Werkstück 24 in die gewünschte Form, wozu der Niederhalter 31 entsprechend ausgebildete Öffnungen für den Stempel 29 besitzt. Nach dem Stanzen wird das Oberwerkzeug 26 wieder (entgegen der Pfeilrichtung 32) angehoben so dass das Werkstück 24 weitergeleitet werden kann. Dieser Vorgang wiederholt sich in periodischen Abständen und bei entsprechenden Produktionsgeschwindigkeiten innerhalb von Sekundenbruchteilen. Sobald allerdings zwischen dem Niederhalter 31 und dem Werkstück 24 eine Stanzbutze 33 oder ein anderer Fremdkörper angeordnet ist, wird der piezoelektrische Sensor 8 ein Signal erzeugen, dass von dem typischen Verlauf derart abweicht, dass die Auswerteeinheit 34 den Stanzprozess unterbricht, so dass die Stanzbutze 33 oder der Fremdkörper entfernt werden kann. Durch die hohen Prozessgeschwindigkeiten beim Stanzen wirken an dem Oberwerkzeug 26 und somit auch an dem Niederhalter 31 und der Kabelverbindung 35 hohe Beschleunigungskräfte, die mit der Zeit zum Abreißen der Kabelverbindung 35 führen.

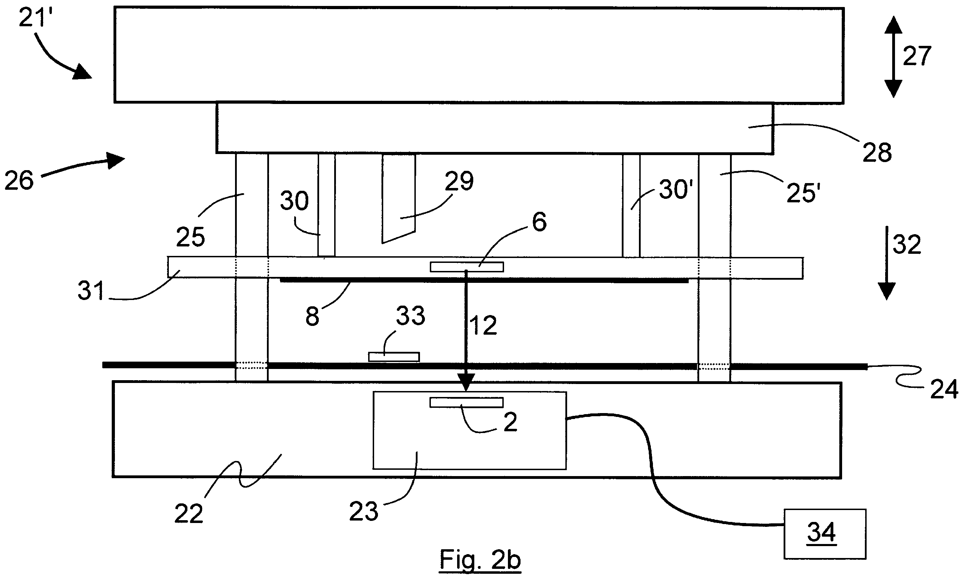

Fig. 2b zeigt daher eine detaillierte Ansicht einer konkreten Ausführungsform der vorliegenden Erfindung, mit der das Abreißen der Kabelverbindung 35 vermieden wird.

Diese Stanzvorrichtung 21' ist im wesentlichen analog zu der Stanzvorrichtung 21 nach dem Stand der Technik (Fig. 2a) aufgebaut, wobei an der Bodenplatte 22 eine Sendereinheit 23 mit einer Spule 2 angeordnet ist. Ferner ist an dem Niederhalter 31 neben einem piezoelektrischen Sensor 8 auch eine Spule 6 befestigt ist, die Teil des (in Fig. 2a nicht dargestellten) Schwingkreises 7 ist. Hierdurch kann auf eine Kabelverbindung 35 zwischen dem beweglichen Teil der Sensorvorrichtung und der Auswerteeinheit 34 verzichtet werden, womit ein Abreißen der Kabelverbindung vermieden wird. Im Übrigen erfolgt die Übertragung des Sensorsignals 13 auf die Weise, wie es bereits im Hinblick auf Fig. 1 erläutert wurde und wonach eine im Schwingkreis 7 angeregte Hochfrequenz induktiv von der Spule 6 auf die Spule 2 übertragen wird (Pfeil 12). Nach einer geeigneten Demodulation wird das Sensorsignal 13 kablegebunden an die Auswerteeinheit 34 übermittelt.

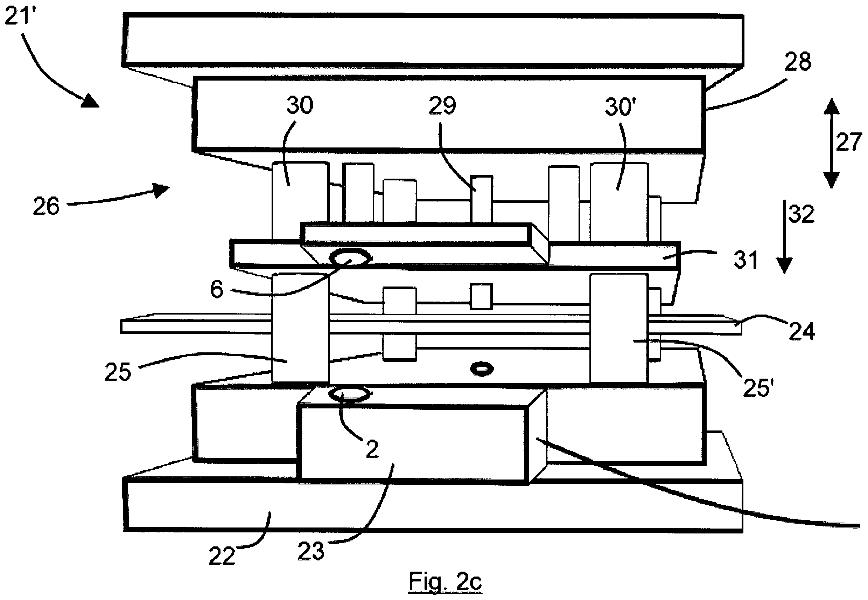

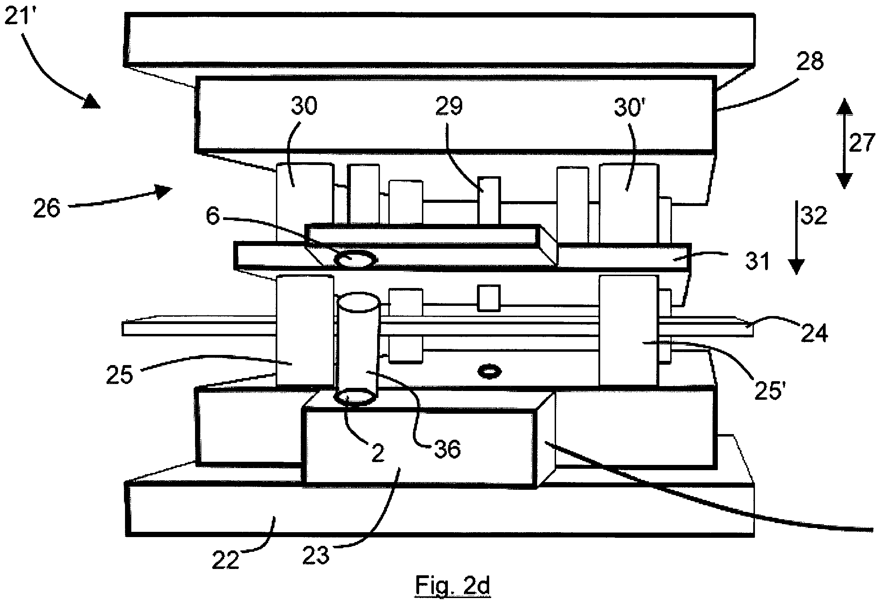

Fig. 2c und d zeigen die Stanzvorrichtung 21' nach Fig. 2b in einer perspektivischen Darstellung. Bei der Ausführungsform nach Fig. 2d ist zudem ein Ferritkern 36 dargestellt, der als ferromagnetische Kopplung die Signalübertragung zwischen den Spulen 2 und 6 verstärkt. Im Übrigen ist die Funktionsweise ebenfalls identisch.

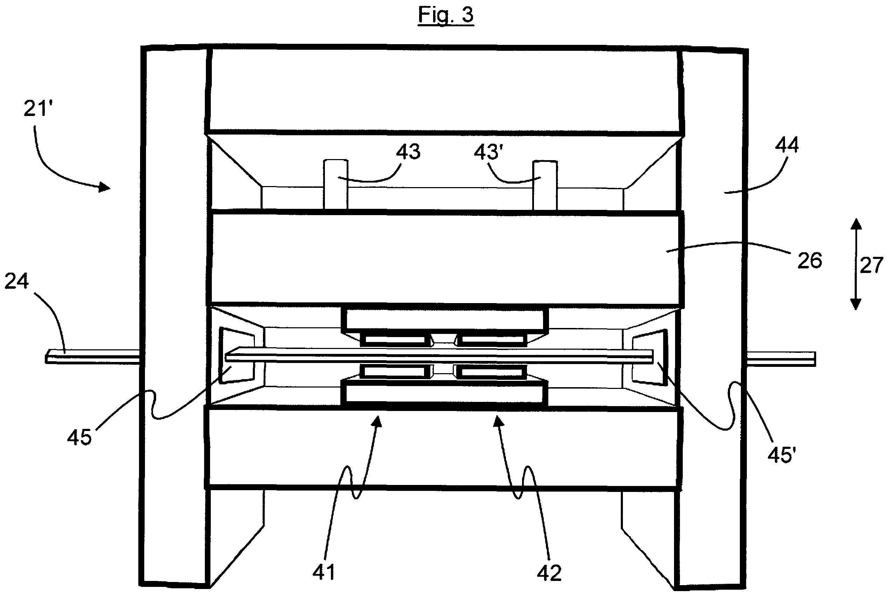

Schließlich zeigt Fig. 3 eine konkrete Ausführungsform einer Stanzvorrichtung 21' mit zwei Bearbeitungsstationen 41, 42, wo gegebenenfalls unterschiedliche Stanzvorgänge durchgeführt werden. Das Oberwerkzeug 26 wird dabei von Hubzylindern 43, 43' in Pfeilrichtung 27 bewegt. Die Hubzylinder 43, 43' sind an einem massiven Rahmen 44 aufgehängt. Seitlich des Rahmens 44 sind zur Durchführung des Werkstücks 24 entsprechend ausgebildete Ausnehmungen 45, 45' angeordnet.

## Patentansprüche

1. Stanzvorrichtung mit mindestens einem oszillierenden Maschinenteil, das mindestens einen piezoelektrischen Sensor (8) besitzt,
**dadurch gekennzeichnet, dass**
der piezoelektrische Sensor (8) elektrisch mit mindestens einer ersten, an dem oszillierenden Maschinenteil befestigten Spule (6) verbunden ist, die induktiv mit mindestens einer zweiten ruhenden Spule (2) gekoppelt ist.

2. Stanzvorrichtung nach Anspruch 1, **dadurch gekennzeichnet, dass** die erste Spule (6) zusammen mit dem piezoelektrischen Sensor (8) und mindestens einer Kapazität einen elektrischen Schwingkreis (7) bildet.

3. Stanzvorrichtung nach einem der Ansprüche 1 oder 2, **dadurch gekennzeichnet, dass** die erste Spule (6) innerhalb eines Trägers (9) angeordnet ist, der vorzugsweise ein- oder zweistückig mit dem oszillierenden Maschineteil verbunden ist.

4. Stanzvorrichtung nach einem der Ansprüche 1 bis 3, **dadurch gekennzeichnet, dass** die erste Spule (6) und die zweite Spule (2) über ein ferromagnetisches Material, insbesondere einen Ferritkern (36), induktiv miteinander gekoppelt sind.

5. Stanzvorrichtung nach einem der Ansprüche 1 bis 4, **dadurch gekennzeichnet, dass** die zweite Spule (2) mit einer Sendereinheit (23) für die Übertragung elektrischer Energie auf die erste Spule (6) verbunden ist.

6. Stanzvorrichtung nach einem der Ansprüche 1 bis 5, **dadurch gekennzeichnet, dass** das oszillierende Maschinenteil ein Niederhalter (31) ist.

7. Stanzvorrichtung nach einem der Ansprüche 1 bis 6, **dadurch gekennzeichnet, dass** der Niederhalter (31) über elastische Elemente (30, 30') mit einer Oberplatte (28) der Stanzvorrichtung (21') verbunden ist, wobei an der Oberplatte (28) mindestens ein Stempel (29) angeordnet ist.

8. Stanzvorrichtung nach einem der Ansprüche 1 bis 7, **dadurch gekennzeichnet, dass** zum Stanzen die Oberplatte (28), der Stempel (29) und der Niederhalter (31) längsaxial beweglich gelagert sind.

9. Verfahren zur Übertragung eines Sensorsignals (13) eines piezoelektrischen Sensors (8), der an einem oszillierenden Maschinenteil einer Stanzvorrichtung (21'), insbesondere an einem Niederhalter (31), angeordnet ist, wobei der piezoelektrische Sensor (8) mit einer ersten, an dem oszillierenden Maschinenteil befestigten Spule (6) verbunden ist, die induktiv mit einer zweiten ruhenden Spule (2) gekoppelt ist, so dass ein an dem piezoelektrischen Sensor (8) entstehendes Sensorsignal (13) auf die zweite Spule (2) übertragen und anschließend an eine Auswerteeinheit (34) übermittelt wird.

10. Verfahren nach Anspruch 9, **dadurch gekennzeichnet, dass** der piezoelektrische Sensor (8) zusammen mit der ersten Spule (6) und mindestens einer Kapazität einen ersten elektrischen Schwingkreis (7) bildet, der durch eine Energieübertragung von der zweiten Spule (2) auf die erste Spule (6) angeregt wird, wobei sich die Schwingung der ersten Spule (6) anschließend auf die zweite Spule (2) überträgt.

11. Verfahren nach Anspruch 10, **dadurch gekennzeichnet, dass** das Sensorsignal (13) eine im Schwingkreis (7) angeregte Hochfrequenz ändert.

12. Verfahren nach einem der Ansprüche 9 bis 11, **dadurch gekennzeichnet, dass** sich das Sensorsignal (13) aus einer Demodulation des Hochfrequenzsignals an der zweiten Spule ergibt.

## Claims

1. Stamping device with at least one oscillating machine part, which has at least one piezoelectric sensor (8),
**characterized in that**
the piezoelectric sensor (8) is electrically connected to at least one first coil (6) attached to the oscillating machine part and inductively coupled to at least one second stationary coil (2).

2. Stamping device according to claim 1, **characterized in that** the first coil (6) builds an electrical oscillating circuit (7) together with the piezoelectric sensor (8) and at least one capacitor.

3. Stamping device according to one of claims 1 or 2, **characterized in that** the first coil (6) is arranged within a carrier (9), which is preferably connected in one or two pieces with the oscillating machine part.

4. Stamping device according to one of claims 1 to 3, **characterized in that** the first coil (6) and the second coil (2) are inductively coupled together via a ferromagnetic material, in particular a ferrite core (36).

5. Stamping device according to one of claims 1 to 4, **characterized in that** the second coil (2) is connected with a transmitter unit (23) for the transmission of electrical energy to the first coil (6).

6. Stamping device according to one of claims 1 to 5, **characterized in that** the oscillating machine part is a hold-down device (31).

7. Stamping device according to one of claims 1 to 6, **characterized in that** the hold-down device (31) is connected with a top plate (28) of the stamping device (21') via elastic elements (30, 30'), wherein at least one stamp (29) is arranged on the top plate (28).

8. Stamping device according to one of claims 1 to 7, **characterized in that** the upper plate (28), the stamp (29) and the hold-down device (31) are mounted longitudinally axially movable for stamping.

9. A method for transmitting a sensor signal (13) of a piezoelectric sensor (8) which is arranged on an oscillating machine part of a stamping device (21'), in particular on a hold-down device (31), wherein the piezoelectric sensor (8) is connected with a first coil (2), attached to the oscillating machine part, which is inductively coupled to a second stationary coil (2), so that a resulting sensor signal (13) at the piezoelectric sensor (8) is transmitted to the second coil (2) and then transmitted to an evaluation unit (34).

10. The method according to claim 9, **characterized in that** the piezoelectric sensor (8) builds a first electrical oscillating circuit (7) together with the first coil (6) and at least one capacitor, the electrical oscillating circuit (7) is activated by an energy transfer from the second coil (2) to the first coil (6), wherein the oscillation of the first coil (6) subsequently transmits itself to the second coil (2).

11. The method according to claim 10, **characterized in that** the sensor signal (13) changes an activated high frequency in the oscillating circuit (7).

12. The method according to any one of claims 9 to 11, **characterized in that** the sensor signal (13) results from a demodulation of the high-frequency signal at the second coil.

## Revendications

1. Dispositif d'estampage comprenant au moins une partie de machine (26) oscillante qui possède au moins un capteur piézoélectrique (8),
**caractérisé par le fait que**
ledit capteur piézoélectrique (8) est relié de façon électrique à au moins une première bobine (6) qui est fixée sur ladite partie de machine oscillante et qui est couplée de manière inductive à au moins une deuxième bobine (2) fixe.

2. Dispositif d'estampage selon la revendication 1, **caractérisé par le fait que** la première bobine (6) forme conjointement avec le capteur piézoélectrique (8) et au moins un condensateur un circuit oscillant électrique (7).

3. Dispositif d'estampage selon l'une quelconque des revendications 1 ou 2, **caractérisé par le fait que** la première bobine (6) est disposée à l'intérieur d'un support (9) qui, de préférence, est relié en une ou deux pièces à ladite partie de machine oscillante.

4. Dispositif d'estampage selon l'une quelconque des revendications 1 à 3, **caractérisé par le fait que** la première bobine (6) et la deuxième bobine (2) sont couplées entre elles de manière inductive par le biais d'un matériau ferromagnétique, en particulier un noyau de ferrite (36).

5. Dispositif d'estampage selon l'une quelconque des revendications 1 à 4, **caractérisé par le fait que** la deuxième bobine (2) est reliée à une unité émettrice (23) pour la transmission d'énergie électrique à la première bobine (6).

6. Dispositif d'estampage selon l'une quelconque des revendications 1 à 5, **caractérisé par le fait que** la partie de machine oscillante est un dispositif de maintien vers le bas (31).

7. Dispositif d'estampage selon l'une quelconque des revendications 1 à 6, **caractérisé par le fait que** le dispositif de maintien vers le bas (31) est relié par l'intermédiaire d'éléments élastiques (30, 30') à une plaque supérieure (28) du dispositif d'estampage (21'), dans lequel au moins un poinçon (29) est disposé sur ladite plaque supérieure (28).

8. Dispositif d'estampage selon l'une quelconque des revendications 1 à 7, **caractérisé par le fait que**, pour l'estampage, ladite plaque supérieure (28), ledit poinçon (29) et ledit dispositif de maintien vers le bas (31) sont logés de manière à être déplaçables dans la direction de l'axe longitudinal.

9. Procédé de transmission d'un signal de capteur (13) d'un capteur piézoélectrique (8) qui est disposé sur une partie de machine oscillante d'un dispositif d'estampage (21'), en particulier sur un dispositif de maintien vers le bas (31), dans lequel ledit capteur piézoélectrique (8) est relié à une première bobine (6) qui est fixée sur ladite partie de machine oscillante et qui est couplée de manière inductive à une deuxième bobine (2) fixe de sorte qu'un signal de capteur (13) née au niveau du capteur piézoélectrique (8) est transmis à la deuxième bobine (2) et est ensuite transmis à une unité d'évaluation (34).

10. Procédé selon la revendication 9, **caractérisé par le fait que** le capteur piézoélectrique (8) forme conjointement avec la première bobine (6) et au moins un condensateur un premier circuit oscillant électrique (7) qui est excité par une transmission d'énergie de la deuxième bobine (2) à la première bobine (6), dans lequel l'oscillation de la première bobine (6) est transmis ensuite à la deuxième bobine (2).

11. Procédé selon la revendication 10, **caractérisé par le fait que** le signal de capteur (13) change une haute fréquence excitée dans le circuit oscillant (7).

12. Procédé selon l'une quelconque des revendications 9 à 11, **caractérisé par le fait que** le signal de capteur (13) résulte d'une démodulation du signal de haute fréquence sur la deuxième bobine.
